# FASCICULE DE BREVET EUROPEEN

(11) **EP 1 395 638 B1**
(45) Date de publication et mention de la délivrance du brevet: **22.08.2007**
(21) Numéro de dépôt: 02735489.3
(22) Date de dépôt: 23.04.2002
(51) Int. Cl.: C09J 9/00, C09J 11/08, C09J 111/02

(54) **AGENT ET SOLUTION DE COAGULATION POUR LA FABRICATION DE COLLES BI OU MULTICOMPOSANTES, PROCEDE DE COLLAGE ET DISPOSITIF CORRESPONDANT**
KOAGULATIONMITTEL UND -LÖSUNG FÜR DIE HERSTELLUNG VON BI- ODER MULTIKOMPONENTENKLEBERN, VERFAHREN ZUM AUFKLEBEN UND ENTSPRECHENDE VORRICHTUNG
COAGULATING AGENT AND SOLUTION FOR THE PRODUCTION OF BI-COMPONENT OR MULTI-COMPONENT GLUES, GLUEING METHOD AND CORRESPONDING DEVICE

(30) Priorité: 24.04.2001 FR 0105527
(43) Date de publication de la demande: 10.03.2004
(73) Titulaire: Collano SA (Société Anonyme), 67520 Marlenheim (FR)
(72) Inventeur: HOSOTTE, Claude, CH-6203 Sempach Station (CH); FERRAND, Damien, CH-6203 Sempach Station (CH)
(74) Mandataire: Nuss, Pierre
(86) Numéro de dépôt international: PCT/FR2002/001390
(87) Numéro de publication internationale: WO 2002/086006

(56) Documents cités:
- WO-A-01/10968
- FR-A- 1 437 431
- US-A- 6 086 997

## Description

La présente invention concerne le domaine des colles industrielles, plus particulièrement celui des colles dites « contact » intervenant dans l'industrie des mousses (synthétiques et de caoutchouc) et notamment celles utilisées dans le cadre de la fabrication de matelas, de sièges, de canapés, de complexes isolants, de mousses techniques...

De manière encore plus spécifique, l'invention concerne les colles bi- ou multicomposantes, en particulier les colles bicomposantes contenant du polychloroprène.

Elle a pour objet un agent de coagulation, une solution contenant un tel agent, leur utilisation pour la fabrication d'une colle bi- ou multicomposante ainsi que la colle obtenue.

Elle a également pour objet un procédé de collage utilisant une telle colle, le produit collé obtenu et un dispositif particulièrement adapté à la mise en oeuvre dudit procédé.

L'usage de colles et plus généralement d'agents de collage est courant dans l'industrie des mousses.

Les mousses industrielles sont généralement assemblées entre elles par collage afin d'obtenir les formes géométriques plus ou moins complexes des volumes à remplir. Elles peuvent également être fixées sur des supports réalisés en une autre matière, telle que le bois ou les matières plastiques, par exemple, dans la fabrication de chaises, de sièges, de canapés... avant d'être recouvertes par des housses textiles ou autres.

Ces différents éléments discrets doivent donc être collés entre eux de manière optimale pour conduire à un système résistant aux contraintes mécaniques usuelles d'utilisation.

Les colles utilisées actuellement aux fins précitées sont généralement des colles mono- ou bicomposantes. En particulier, les formulations adhésives à base de polychloroprène sont connues depuis longtemps dans ce domaine, principalement en remplacement de colles à base de latex naturel.

Les colles à base de polychloroprène sont donc traditionnellement utilisées en base solvantée comme colle « contact », pour le collage d'une grande variété de matériaux, tels que le bois, le métal, les tissus, les non-tissés, le papier, les plastiques comme le polystyrène, le PVC, le polyéthylène, notamment dans le domaine des mousses et de l'ameublement (matelas, sièges, canapés, etc..).

Dans le cas précis des colles solvantées, le polychloroprène est dissout ou dispersé dans un solvant volatil, le plus souvent des solvants chlorés ou à bas point d'inflammation. Du fait de la présence de ces solvants volatils, le temps de séchage de la colle contact avant assemblage est relativement rapide.

Or, ces dernières années, une demande grandissante est apparue pour des produits sans solvant, à base aqueuse, ce pour des raisons notamment de sécurité, de santé ou d'environnement.

En effet, les colles à base de solvants organiques présentent potentiellement des risques pour la santé et la sécurité des ouvriers ou des utilisateurs : caractère irritant ou nocif de certains solvants utilisés et inflammabilité, risques de concentration dans des locaux mal aérés, risques environnementaux lors de la fabrication ou du recyclage...

Par ailleurs, il a également été noté que ces solvants, lors de leur évaporation, migraient dans lesdites mousses et conduisaient au ramollissement et à l'affaiblissement de ces dernières.

Dans le cas du polychloroprène mis en oeuvre sous forme de dispersion dans de l'eau (« latex » de polychloroprène), et lors de son application, l'évaporation de l'eau est beaucoup plus lente, le film de colle ne se formant pas immédiatement. Or, dans beaucoup d'applications on a besoin que, rapidement après application de l'adhésif sur le support, on puisse procéder à l'assemblage et que la colle développe immédiatement des propriétés mécaniques importantes.

Pour obtenir cette adhésion quasi-instantanée, une des solutions consiste, lors de l'application, à déstabiliser le « latex » de polychloroprène, pour provoquer une coagulation instantanée sur le support, et ainsi obtenir les propriétés de collage désirées.

A cette fin, une des méthodes les plus utilisées consiste à déstabiliser un « latex » de polychloroprène stabilisé de manière anionique, par addition d'un agent de coagulation ou d'une solution contenant un tel agent. Cette solution contient le plus souvent un acide organique de type acide acétique, acide citrique, acide lactique, ou du sulfate de zinc ou d'aluminium.

Cependant, l'utilisation de ces « latex » de polychloroprène, présente à son tour un certain nombre d'inconvénients et de limitations pénalisantes, notamment dans le cadre de la fabrication de meubles dont les assises ou le couchage sont garnis de mousses synthétiques ou naturelles.

L'un des inconvénients principaux est le dégagement d'acide chlorhydrique (HCl) ou d'autres substances chlorées agressives, par dégradation des chaînes de polychloroprène.

En effet, les colles bicomposantes à base de polychloroprène (2-chloro-1,3-butadiène) ont tendance à dégager, au niveau des joints ou des surfaces de collage, des quantités non négligeables d'acide chlorhydrique et/ou de substances chlorées corrosives provenant de la décomposition de ladite colle avec le temps et/ou sous l'influence de certaines conditions climatiques (exposition à des rayonnements UV, températures élevées, air humide...).

Les substances émises, qui peuvent également attaquer certains types de mousses, migrent alors par diffusion jusqu'au niveau du tissu ou des matériaux recouvrant les objets remplis de telles mousses. On assiste alors dans certains cas, en particulier pour les cellulosiques, à des décolorations très nettes desdits tissus ou desdits matériaux nuisant d'autant plus à l'esthétique que celles-ci sont locales et marquées. Evidemment, les propriétés et qualités des tissus ou matériaux attaqués se trouvent largement affectées par le contact avec ces substances agressives. Le dégagement de substances chlorées corrosives peut également provoquer une attaque des métaux comme le fer.

Dans certains cas particulièrement sévères les dégradations peuvent se transmettre, par le biais de quantités résiduelles de substances agressives qui s'accumulent à la surface externe des produits, aux vêtements ou à la peau de l'utilisateur qui serait en contact prolongé avec lesdits produits, provoquant les dégradations susvisées et pouvant conduire à des allergies et irritations de la peau.

Le remplacement, pour des raisons écologiques, des solvants organiques par des solvants aqueux a encore accentué ce dernier problème, les quantités relatives de polychloroprène présentes dans les colles étant beaucoup plus importantes dans les nouvelles colles à base d'eau.

En outre, il s'est avéré que la dégradation naturelle due au vieillissement du polychloroprène est largement accélérée par la présence d'oxygène et/ou de lumière visible et principalement ultraviolette ainsi que par des températures élevées. Ainsi, les matériaux transparents ou semi-transparents comme les films plastiques, les tissus, etc. collés avec ce type de colle sont particulièrement sensibles.

Dans la plupart des cas, la détérioration du film de colle se traduit visuellement par un brunissement et par une perte significative des propriétés mécaniques de collage.

Une solution visant à supprimer ces dégradations consiste à ajouter des anti-oxydants et anti-UV aux formulations concernées pour éviter la dégradation des chaînes de polychloroprène. Mais bien souvent cette méthode ne suffit pas, et les fabricants de latex sont contraints de préconiser également l'ajout de composés destinés à capter les émissions d'HCl. Le plus souvent il s'agit pour ces capteurs de poudre d'oxyde métallique comme l'oxyde de zinc ou l'oxyde de magnésium. Le désavantage principal de cette méthode est que ces poudres tendent à former des agglomérats dans l'eau pouvant causer, d'une part, un bouchage des buses de pulvérisation et, d'autre part, une répartition inhomogène de l'oxyde dans le film de colle, laissant des zones non protégées. Un autre désavantage important est la tendance à sédimenter de ces oxydes, du fait de leurs densités, lors du stockage des solutions aqueuses les contenant.

Le problème posé à la présente invention consiste à pallier certains sinon l'ensemble des inconvénients précités et de proposer un moyen permettant de rendre les colles pour mousses industrielles aussi performantes que les autres colles jusqu'ici couramment mises en oeuvre, tout en permettant de généraliser l'emploi d'un solvant aqueux et de réduire ou d'éliminer le plus possible la production de substances nocives liées à la décomposition naturelle et/ou induite desdites colles.

A cet effet, la présente invention a pour principal objet un agent de coagulation pour colles bi- ou multicomposantes présentant au moins une première composante coagulante et une seconde composante adhésive, caractérisé en ce qu'il comprend essentiellement au moins un polymère possédant au moins un groupement fonctionnel acide et au moins un polymère possédant au moins un groupement fonctionnel basique.

L'introduction d'un tel agent de coagulation permet d'absorber la plus grande partie voire l'intégralité des substances nocives produites par la décomposition de la composante adhésive et de les retenir dans les films de colle où elles sont neutralisées ou maintenues capturées.

La présente invention a également pour objet une solution contenant un agent de coagulation, l'utilisation d'un tel agent de coagulation ou d'une telle solution pour l'obtention d'une colle bi- ou multicomposante et une colle comprenant au moins un tel agent de coagulation ou au moins une solution contenant un tel agent.

La présente invention a encore pour objet un procédé de collage, caractérisé en ce qu'il consiste à réunir par copulvérisation les deux composantes coagulante et adhésive d'une colle bicomposante selon l'invention afin d'obtenir un film adhésif globalement homogène déposé sur l'une au moins des deux parties ou faces des éléments à coller ensemble puis à mettre en contact ladite ou lesdites parties ou face(s) encollée(s), le produit collé susceptible d'être obtenu par ledit procédé et un dispositif pour la mise en oeuvre dudit procédé selon l'invention.

Ce dispositif est caractérisé en ce qu'il est réalisé sous la forme d'un pistolet présentant une première buse et une seconde buse coaxiales ou sensiblement coaxiales, la première buse étant reliée à un réservoir contenant la première composante coagulante et la seconde buse étant reliée à un réservoir contenant la seconde composante adhésive.

L'invention sera mieux comprise, grâce à la description ci-après, qui se rapporte à un mode de réalisation préféré, donné à titre d'exemple non limitatif.

La présente invention a donc pour objet un agent de coagulation pour colles bi- ou multicomposantes présentant au moins une première composante coagulante et une seconde composante adhésive, caractérisé en ce qu'il comprend essentiellement au moins un polymère possédant au moins un groupement fonctionnel acide et au moins un polymère possédant au moins un groupement fonctionnel basique.

Le terme polymère définit des macromolécules constituées par l'enchaînement de molécules de taille beaucoup plus petite appelées monomères. Lorsque l'enchaînement ne comprend que quelques monomères, le terme d'oligomère est parfois employé à la place de polymère. Mais il n'existe pas de règle absolue, ni de nombre déterminé d'unités monomère en deçà duquel on parlera d'oligomère et au delà de polymère. Pour ces raisons, dans la suite de la présente description, nous utiliserons le terme polymère pour désigner tout enchaînement de plus de deux unités de monomère. Le terme polymère employé dans le cadre de la présente invention englobe à la fois les homopolymères constitués par la répétition d'un monomère identique et les copolymères qui sont constitués par une succession de monomères différents.

De manière classique, lesdits polymères peuvent également présenter des ponts entre-eux (réticulés), des groupements greffés, etc.

Les inventeurs ont découvert de manière surprenante et inattendue que des polymères comprenant, d'une part, un groupement basique susceptible de se protoner et, d'autre part, un groupement acide permettent, lorsqu'ils sont ajoutés au coagulant, de capter les émanations de substances nocives, par exemple, de substances chlorées comme le HC1 gazeux et qu'ils permettent ainsi une protection supérieure des matériaux directement en contact avec la colle, mais aussi les matériaux environnants susceptibles d'être au contact desdites substances.

Selon un mode de réalisation particulier, l'agent selon l'invention est caractérisé en ce qu'il comprend au moins un polymère possédant à la fois au moins un groupement fonctionnel acide et au moins un groupement fonctionnel basique.

Il a, en effet, été découvert de manière surprenante, que les propriétés particulières de capteur d'acide, pouvaient être observées aussi bien lorsque les fonctions acides et les fonctions basiques étaient présentes sur un même polymère (polymère amphotère), que par mélange de polymères portant des fonctions acides et de polymères portant des fonctions basiques, ou même dans le cas d'un mélange quelconque d'au moins deux des polymères précités.

Selon une autre caractéristique de l'invention, l'agent de coagulation est caractérisé en ce qu'au moins un groupement fonctionnel acide est un groupement carboxyle.

Selon encore une autre caractéristique, au moins un groupement fonctionnel basique comporte au moins un atome d'azote.

De manière préférée, au moins un groupement fonctionnel basique est un groupement aminé. L'agent selon l'invention est encore caractérisé en ce qu'au moins un groupement fonctionnel basique est choisi dans le groupe formé par: la 2-vinylpyridine, la 4-vinylpyridine, le (méth)acrylate de béta-aminoéthyle, le (méth)acrylate de t-butylaminoéthyle, le (méth)acrylate de méthylaminoéthyle, ainsi que le (méth)acrylate de diméthylaminoéthyle, la N-monométhylaminoéthyl(méth)acrylamide, la diméthylaminopropyl-(méth)acrylamide et leurs mélanges.

Il a été trouvé, en effet, que dans le cas où les fonctions acides sont des fonctions acides carboxyliques, et où les fonctions basiques sont des groupements aminés, le polymère ou mélange de polymères est particulièrement avantageux, notamment en terme de protection.

Les polymères contenant ces fonctions peuvent être de différentes familles, mais ceux synthétisés par polymérisation radicalaire de monomères fonctionnels acryliques ou méthacryliques, seront préférés, du fait de la bonne maîtrise de cette méthode de polymérisation par l'homme du métier, du fait de la disponibilité de nombreux monomères correspondants, ainsi que du fait de leurs coûts acceptables. De tels composés sont, par exemple, disponibles sous la marque ENOREX de la société Collano AG CH-6203 Sempach-Station.

Une description plus générale des polymères ou des monomères destinés à la synthèse de polymères intéressant l'invention est donnée ci-après.

Un autre avantage de l'utilisation de ces polymères au lieu des oxydes métalliques, est la possibilité, du fait des propriétés intrinsèques de ces polymères, de modifier les propriétés adhésives et mécaniques du collage. Il est facile à l'homme du métier de comprendre que l'adjonction de divers polymères (par le biais du coagulant) à la composante adhésive, par exemple une composante contenant du polychloroprène, puisse modifier les caractéristiques finales du film de colle, comme par exemple le collant initial, la pégosité, l'élasticité, la cohésion du film, l'adhésion du film sur le support, la résistance mécanique à la traction, la résistance à la température... Le ou les (co)polymères fonctionnalisés entrant dans la composition du coagulant peuvent être obtenus par des méthodes connues de polymérisation radicalaire de monomères à insaturation éthylénique. A ce sujet, on pourra notamment se référer au livre "La polymérisation / principes et application" de G. Odian (traduit en français par E. Franta).

Pour obtenir de tels polymères, un procédé avantageux consiste à polymériser:
- au moins un monomère (a) à insaturation éthylénique possédant un groupe susceptible de se protoner dans le milieu d'application,
- au moins un monomère (b) à insaturation éthylénique portant une fonction acide et susceptible de s'ioniser négativement dans le milieu d'application et éventuellement au moins un monomère (c) neutre, copolymérisable avec au moins un des monomères précités.

Pour l'obtention d'un polymère amphotère, la polymérisation portera soit sur la copolymérisation d'au moins un monomère (a) et d'au moins un monomère (b) et d'au moins un monomère (c), soit sur la copolymérisation d'au moins un monomère (a) et d'au moins un monomère (b).

Pour l'obtention d'un polymère à caractère anionique, la polymérisation portera soit sur la copolymérisation d'au moins un monomère (b) et d'au moins un monomère (c), soit sur la polymérisation d'au moins un monomère (b).

Pour l'obtention d'un polymère à caractère cationique, la polymérisation portera soit sur la copolymérisation d'au moins un monomère (a) et d'au moins un monomère (c), soit sur la polymérisation d'au moins un monomère (a).

La polymérisation radicalaire est, de préférence, conduite dans un environnement inerte, exempt d'oxygène. La polymérisation peut s'effectuer en masse ou dans un milieu solvant. De préférence, on utilisera un solvant inerte comme le méthanol, l'éthanol, l'eau ou un mélange de ceux-ci. De manière préférée, on conduira la polymérisation dans de l'eau.

La polymérisation est initiée par addition d'un amorceur de polymérisation, qui est un générateur de radicaux libres. Des exemples de tels composés utilisés dans la technique comprennent les peresters organiques (t-butylperoxypivalate, t-amylperoxypivalate, etc...), des composés de type azo (l'azo-bis isobutyronitrile, l'azo-bis 2,4 diméthylvaléronitrile, l'azo-bis cyclohexane carbonitrile, le chlorhydrate d'azo-bis amidinopropane, etc...), les peroxydes inorganiques et organiques (par exemple le peroxyde d'hydrogène, le peroxyde de benzyle, l'hydroperoxyde de t-butyle, l'hydroperoxyde de cumyle, etc.), des systèmes amorceurs dits « redox », par exemple ceux comprenant des agents oxydants (comme les persulfates (d'ammonium ou de métal alcalin), les chlorates, les bromates, les peroxydes, les hydroperoxydes), et des agents réducteurs (comme par exemple les sulfites ou bisulfites (y compris les produits de réaction avec des produits organiques tels les aldéhydes ou les cétones), l'acide oxalique, l'acide ascorbique, le glucose, ainsi que les mélanges de deux ou plusieurs de ces composés. Les amorceurs redox peuvent avantageusement être catalysés par des ions métalliques possédant plusieurs degrés d'oxydation (par exemple, Fe, Cu, Ti, Cr, Ni, Co, Zn, etc...).

Les amorceurs préférés sont des amorceurs partiellement ou entièrement solubles dans l'eau, De manière préférentielle, on choisira des amorceurs totalement solubles, comme le persulfate de sodium, le persulfate de potassium, le chlorhydrate d'azo-bis-amidinopropane, et le système redox persulfate de potassium/bisulfite de sodium.

En variante, on peut réaliser des amorçages photochimiques, à l'aide de systèmes générant des radicaux libres par irradiation ultraviolette (UV) ou visible. Ces composés contiennent, par exemple, des groupements cétone tels que la benzophénone et l'acétophénone. D'autres produits comme la benzoïne, les éthers dérivés de la benzoïne, le benzyle et les acétals de benzyle sont connus et employés dans la technique d'amorçage photochimique.

La quantité d'amorceur utilisée est en général une quantité requise pour amorcer la polymérisation et obtenir une conversion complète du ou des monomères insaturés dans un temps raisonnable, qu'estimera l'homme du métier.

De préférence, les amorceurs sont présents en une proportion allant de 0,01 % à 10% en poids par rapport au poids total des monomères, une proportion préférée étant située dans une plage de 0,1 à 4 %.

L'amorceur peut être ajouté, tout ou en partie, au début ou en cours de polymérisation, de manière continue ou discontinue.

La polymérisation est réalisée dans des conditions réactionnelles connues par l'homme du métier. Tout ou une partie des monomères peuvent être ajoutés au début, puis au cours de la polymérisation, de manière discontinue ou continue. Une manière préférée est la technique dite « semi-batch ». De préférence, la polymérisation est conduite à une température allant environ de 20°C à 120°C (pour une réaction en autoclave), et plus préférentiellement de 50°C à 90°C.

De manière avantageuse, pour la synthèse des polymères contenant des fonctions basiques, un procédé consiste à (co)polymériser des monomères comportant, d'une part, une insaturation éthylénique et, d'autre part, un groupement aminé susceptible de se protoner.

Il est possible d'utiliser les monomères suivants comme monomères (a) comprenant des groupes aminés:

### a) éthers vinyliques d'aminoalkyle

On peut citer le béta-aminoéthylvinyléther, le N-monométhyl-béta-aminoéthylvinyléther, le N-monobutyl-béta-aminoéthylvinyléther, le N-monométhyl-3-aminopropylvinyléther et leurs combinaisons.

### b) les composés vinyliques aromatiques

On peut citer la 2-vinylpyridine, la 4-vinylpyridine, la 2-éthyl-5-vinylpyridine et leurs mélanges.

### c) les esters dérivés de (méth)acrylates ou (méth)acrylamide, tels que ceux représentés par la formule I suivante :

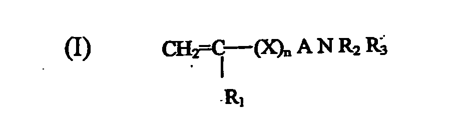

dans laquelle
R₁ est H ou méthyl
X est O ou N(H)
n est égal à 0 ou à 1
   si n=0 alors A est O (CH₂)ₓ avec x = 2 ou 3
   si n=1 alors A est CₙH₂ₙ avec n variant de 2 à 4
R₂ est H, méthyl, éthyl,
R₃ est H, phényl, benzyl, cyclohexyl, alkyle linéaire ou ramifié en C₁ - C₆

Comme exemples de monomères préférés de la formule I, on peut citer: le (méth)acrylate de béta-aminoéthyle, le (méth)acrylate de t-butylaminoéthyle, le (méth)acrylate de dipropylaminoéthyle, le(méth)acrylate de méthylaminoéthyle, ainsi que le (méth)acrylate de N-méthyl-N-hydroxyéthylaminoéthyle, le (méth)acrylate de N-(mono-n-butyl)-4-aminobutyle, la méthacryloxyéthoxyéthylamine et leurs mélanges et plus préférentiellement le (méth)acrylate de diméthylaminoéthyle.

On peut aussi citer comme monomères préférés, la N-béta-aminoéthyl (méth)acrylamide, la N-monométhylaminoéthyl (méth)acrylamide, la diméthylaminopropyl(méth)acrylamide et leurs mélanges.

### d) les dérivés de la vinylamine

Les dérivés tels le vinylformamide ou le vinylacétamide conduisent après polymérisation à des polymères susceptibles d'être hydrolysés, donnant naissance à des polyvinylamines.

### e) autres

On peut également utiliser comme monomères susceptibles de se protoner des N-acryloxyalkyl-oxazolidines et N-acryloxyalkyltétrahydro-1,3-oxazines et les mélanges de ceux-ci.

Ces composés ont la formule II suivante : 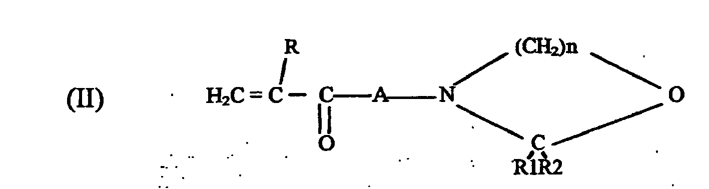 dans laquelle
R est H ou CH₃,
n=2 ou 3,
A est O (CH₂)ₙ ou (O alkylène)ₘ ayant une masse molaire moyenne comprise entre 88 g et 348 g et où les groupes alkylène sont l'éthylène et/ou le propylène,
R₁, R₂ peuvent être H, un groupe aryle ou un groupe alkyle.

Les composés de la formule II, sont décrits dans les brevets US 3 037 006 et US 3 502 627. Ces composés peuvent s'hydrolyser pour donner des amines secondaires ayant la structure donnée dans la formule III suivante :

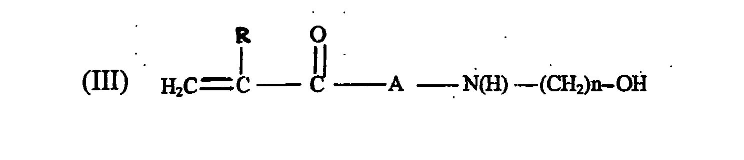

Il peut être utile de synthétiser des polymères à partir de monomères possédant une fonction amine bloquée, susceptible d'être hydrolysée par la suite, comme les acryloxy-kétimines ou les acryloxyaldimines, dans lesquels l'amine se trouve conjuguée à un atome de carbone par une liaison insaturée N=C. Dans les conditions appropriées, l'hydrolyse de cette liaison libère une amine primaire.

### monomère (b)

Pour la synthèse de (co)polymères comportant une fonction acide, on choisira avantageusement les monomères parmi les acides carboxyliques, sulfoniques, sulfuriques, phosphoniques et phosphoriques en C₃-C₈ à insaturation éthylénique.

De manière préférée, le monomère acide est choisi parmi l'acide acrylique, l'acide méthacrylique, l'acide alpha-éthacrylique, l'acide béta-carboxyéthylacrylate, l'acide méthylènemalonique, l'acide vinylacétique, l'acide allylacétique, l'acide crotonique, l'acide maléique, l'acide fumarique, l'acide itaconique, l'itaconate de monométhyle, le fumarate de monométhyle, le fumarate de monobutyle, l'anhydride maléique, l'acide mesaconique, la N méthacrylo-alanine, la N-acryloylhydroxy-glycine, l'acrylate de sulfopropyle, l'acrylate de sulfoéthyle, le méthacrylate de sulfoéthyle, l'acide 2-acrylamido-2-méthylpropanesulfonique, l'acide styrènesulfonique, l'acide vinylsulfonique, l'acide vinylphosphonique, l'acrylate de phosphoéthyle, l'acrylate de phosphonoéthyle, l'acrylate de phosphopropyle, l'acrylate de phosphonopropyle, le méthacrylate de phosphoéthyle, le méthacrylate de phosphonoéthyle, le méthacrylate de phosphopropyle, le méthacrylate de phosphonopropyle, les sels de métaux alcalins et d'ammonium de ceux-ci.

### monomère (c) neutre

Une petite proportion de monomère relativement hydrophobe peut également être utilisée pour la réalisation du polymère hydrosoluble. Il existe une grande variété de monomères neutres à insaturation éthylénique, susceptibles être copolymérisés pour obtenir les polymères revendiqués.

Un choix préférentiel est la famille des (méth)acrylates. On entend par (méth)acrylates des monomères dérivés de l'acide acrylique et/ou de l'acide méthacrylique. Cela inclut les esters ou les amides de ces composés ainsi que leurs dérivés. Il s'agira de préférence des esters de (méth)acrylates, d'acrylamides et de méthacrylamides possédant une chaîne alkylique latérale en C₁-C₁₂ et leurs mélanges. De préférence, on choisira par exemple l'acrylate de méthyle, d'éthyle, de n-butyle, de t-butyle, de 2-éthylhexyle, de décyle, d'isobornyle, le méthacrylate de méthyle, d'éthyle, de n-propyle, d'isopropyle, de n-butyle, d'isobutyle, de sec-butyle, de cyclohexyle, d'isodécyle, d'isobornyle, de t-butyle, de stéaryle, de glycidyle, de dicyclopentenyle ou de phényle.

Il peut aussi être avantageux de choisir des monomères neutres parmi des esters vinyliques tels que les versatates de vinyle, le laurate de vinyle ou le stéarate de vinyle.

Il peut aussi être avantageux de choisir des monomères neutres parmi les monomères vinyliques aromatiques, tels le styrène, le p-méthylstyrène, le o-méthylstyrène, l'o,p-diméthylstyrène, l'o,p-diéthylstyrène, le p-chlorostyrène, l'isopropylstyrène, le t-butylstyrène, l'o-méthyl-p-isopropylstyrène, l'o,p-dichlorostyrène et leurs mélanges. Les monomères vinyliques aromatiques préférés sont le styrène et le vinyltoluène, notamment à cause de leur disponibilité et de leur faibles coûts, de façon plus préférentielle le styrène.

On peut également employer des monomères neutres insaturés plutôt hydrosolubles, comme par exemple l'acétate de vinyle, le (méth)acrylate d'hydroxyéthyle, les mono et di (méth)acrylates d'éthylène glycol et les mono et di (méth)acrylates de propylèneglycol, le (méth)acrylate de méthoxyéthyle, le (méth)acrylate d'éthoxyéthyle le (méth)acrylate de méthoxypropyle, le (méth)acrylate d'éthoxypropyle, le (méth)acrylate de butoxyéthyle et leurs mélanges.

Lorsque l'on désire contrôler la masse molaire des polymères obtenus, il est possible d'employer des agents de transfert de chaîne de préférence le tétra-chlorure de méthyle et tétrabromure de méthyle et les mercaptans tels par exemple l'éthyl-mercaptan, le butyl-mercaptan, le n-dodécyl-mercaptan, l'octyl-mercaptan, l'isooctyl-mercaptan, l'acide thioglycolique et ses esters dérivés (de butyle, d'isooctyle, de dodécyle), l'amino-2-éthylmercaptan et le thioéthanol.

Selon un autre mode de réalisation, il est également possible d'utiliser un mélange de polymères comprenant pour la composante basique une polyimine (ou polyiminoalkylène). Les polyimines sont des polymères produits par polymérisation de monomères qui ne comportent pas d'insaturation éthylénique C=C mais qui, soit contiennent une insaturation carbone-azote, soit forment un composé cyclique. Après polymérisation les polyimines ont des atomes d'azote inclus dans la chaîne du polymère. Ces atomes peuvent se protoner (en présence d'HCl par exemple) de la même façon que des groupes aminés "pendants".

Certains éthers cycliques de type endo-imine (formule IV) peuvent se polymériser par voie cationique et donner une poly (N-acylalkylèneimine) qui, après hydrolyse, donne naissance à une polyalkylèneimine. 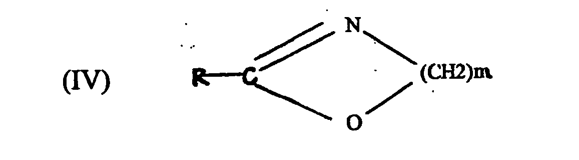 où m=2 ou 3, R = phényl, benzyl, ou un groupement alkyle en C₁-C₁₂.

Les monomères les plus courants sont les 2-oxazolidines substituées en position 2 (m=2), ou les 5,6-dihydro-4H-1,3-oxazines (m=3) substituées en position 2.

Les polyimines qui peuvent convenir comme polymères comportant une fonction basique sont les polyéthylèneimines ou les polypropylèneimines, notamment celles qui sont disponibles chez BASF sous le nom POLYMIN (marque déposée).

Selon une autre caractéristique de l'invention, le rapport R entre le nombre de groupements fonctionnels acides et le nombre de groupements fonctionnels basiques présents sur le ou les polymères est compris entre 1:80 et 1:1.

De manière préférée, le rapport R est compris entre 1:20 et 1:7.

Selon une autre caractéristique, l'agent de coagulation selon l'invention contient au moins un polymère présentant au moins un monomère (méth)acrylique muni d'au moins une fonction acide. De manière avantageuse, il contient au moins un polymère dont au moins l'un des monomères est choisi dans le groupe formé par l'acide fumarique, l'acide maléique, l'acide itaconique, l'anhydride maléique, le fumarate de monométhyle et le fumarate de monobutyle.

Selon une autre caractéristique préférée, l'agent de coagulation selon l'invention est caractérisé en ce qu'il contient au moins un polymère dont au moins l'un des monomères est un acrylate, un méthacrylate, une acrylamide ou une méthacrylamide et comportant une amine susceptible de se protoner.

De préférence, l'agent selon l'invention est caractérisé en ce que la masse molaire moyenne du ou des polymères possédant le ou les groupements acides et/ou basiques est inférieure à 1 000 000 g, de préférence inférieure à 500 000 g et plus préférentiellement comprise entre 500 et 500 000 g.

Sauf indication contraire, lorsque l'on parlera de masse molaire d'un polymère ou d'un mélange de polymères, il s'agira de la masse molaire moyenne en poids (en masse), exprimé en grammes. Celle-ci peut être déterminée de plusieurs façons comme par exemple par chromatographie à perméation de gel CPG, par viscosimétrie, ou par spectrométrie de masse à temps de vol dite « MALDI-TOF ».

La présente invention a également pour objet une solution contenant un agent de coagulation selon l'invention.

Selon une caractéristique avantageuse, le solvant du ou des polymères est essentiellement de l'eau. En effet, l'agent de coagulation ou agent coagulant est préférentiellement réalisé sous la forme d'une solution aqueuse de polymère. Par solution aqueuse on doit comprendre que le solvant est essentiellement l'eau. La présence d'une faible quantité (au maximum 5% en poids) de solvant organique soluble dans l'eau et pouvant faciliter la mise en solution du polymère, favoriser la coagulation de la composante adhésive ou améliorer la mouillabilité des surfaces encollées n'est toutefois pas exclue.

Il est également possible de trouver des traces résiduelles de solvants organiques issus des constituants de l'agent de coagulation. Cependant, les solutions utilisant exclusivement de l'eau sont préférées.

On limite ou on évite ainsi tout risque d'irritation et/ou de toxicité pour les utilisateurs et l'environnement et on limite également au maximum le caractère inflammable de la solution employée.

Pour obtenir les performances de stabilité du film de colle ainsi qu'une coagulation satisfaisante d'une composante adhésive constituée, par exemple, essentiellement de polychloroprène, la solution selon la présente invention est caractérisée en ce que la teneur en groupement fonctionnel basique est supérieure à 0,1 mol/litre.

La solution d'agent de coagulation selon l'invention est encore caractérisée en ce qu'elle présente une teneur en polymère(s) possédant un ou plusieurs groupements acides et/ou basiques comprise entre 0,1 % et 45 % en poids.

De préférence, ladite solution présente une teneur en polymère(s) possédant un ou plusieurs groupements acides et/ou basiques comprise entre 0,2 % et 15 % en poids.

Selon une autre caractéristique, la solution selon l'invention est caractérisée en ce que son pH est inférieur à 7, de préférence inférieur à 5. En effet, le système bi-composante ou multicomposante conduit à une coagulation efficace lorsque l'agent coagulant présente une valeur de pH acide c'est-à-dire inférieure à 7 et de préférence, pour une coagulation optimale, inférieure à 5.

Le ou les polymères contenus dans l'agent de coagulation présentent des propriétés amphotères ce qui peut nécessiter un ajustement du pH. Il est possible d'ajouter des acides faibles ou des sels métalliques acides, utilisés traditionnellement comme agents coagulants, pour ajuster la valeur de pH.

Ainsi, la solution coagulante selon l'invention est encore caractérisée en ce qu'elle comprend, en outre, au moins un acide faible, de préférence un acide faible organique.

De manière avantageuse, le ou les acides faibles sont choisis dans le groupe formé par l'acide formique, l'acide acétique, l'acide propanoïque, l'acide butanoïque, l'acide lactique, l'acide tartrique, l'acide ascorbique, l'acide phosphorique et l'acide glycolique.

Il est également possible d'utiliser un ou plusieurs sels métalliques acides en conjonction ou en remplacement du ou des acides précités.

Selon une variante, la solution selon l'invention est donc caractérisée en ce qu'elle comprend, en outre, au moins un sel métallique acide.

De façon particulièrement avantageuse, le ou les sels métalliques acides sont choisis parmi le sulfate de zinc ou le sulfate d'aluminium.

L'utilisation de ces sels présente généralement l'avantage de ne pas conduire à une attaque et donc à une détérioration de pièces présentes dans l'appareillage de pulvérisation et qui seraient sensibles au contact avec des acides organiques. L'ajout de sels tels que le chlorure de calcium ou le chlorure de sodium peut également conduire à une augmentation de la force ionique et pourrait également contribuer à la déstabilisation de la composante adhésive.

La viscosité de l'agent coagulant est réglée de manière à obtenir une solution qui soit parfaitement pulvérisable avec des appareillages classiques de pulvérisation.

Selon une autre caractéristique de l'invention, la solution contenant l'agent de coagulation est caractérisée en ce qu'elle présente une viscosité comprise entre 0,9 mPa.s et 10 000 mPa.s, de préférence inférieure à 500 mPa.s, de manière à pouvoir être appliquée par pulvérisation.

Cette dernière dépend principalement du type du ou des polymères formulés dans l'agent de coagulation, de leurs poids moléculaires et de leurs concentrations.

La présente invention a encore pour objet l'utilisation d'un agent de coagulation ou d'une solution selon l'invention pour l'obtention d'une colle bi- ou multicomposante ainsi que la colle bi- ou multicomposante comprenant au moins un agent de coagulation ou au moins une solution contenant un tel agent selon l'invention.

Selon un mode de réalisation particulièrement préféré, la colle selon l'invention est caractérisée en ce qu'elle est bicomposante, l'agent de coagulation ou la solution contenant un tel agent selon l'invention constituant la première composante coagulante, la seconde composante étant la composante adhésive.

De manière encore plus préférée, la colle selon l'invention est caractérisée en ce que la seconde composante adhésive contient du polychloroprène ou poly(2-chloro- 1,3-butadiène) susceptible de coaguler par diminution du pH.

Ainsi, l'agent coagulant est utilisé en présence d'au moins une composante adhésive qu'il est capable de déstabiliser. Cette composante adhésive contient du polychloroprene en dispersion aqueuse. Le polychloroprène fait référence à un homopolymère ou à un copolymère de chloroprène (2-chloro-1,3-butadiène), éventuellement polymérisé en présence de comonomères à insaturations éthyléniques tels que le styrène ou des acrylates.

Les dispersions de polychloroprènes disponibles sur le marché et susceptibles d'être mises en oeuvre dans la présente invention sont généralement des dispersions anioniques c'est-à-dire stabilisées à l'aide de tensio-actifs anioniques éventuellement combinés à des tensio-actifs non-ioniques. De préférence, on utilisera des dispersions anioniques qui vont coaguler par diminution du pH.

A coté du polychloroprène en dispersion, la composante adhésive peut contenir d'autres dispersions de polymères, des résines en dispersions, des additifs selon les formulations standards habituelles de l'état de la technique. On peut également se rapporter aux compositions décrites dans les fiches techniques des fournisseurs de polychloroprène en dispersion, tels que les sociétés Enichem, Du Pont De Nemours, Dow Elastomers, Bayer...

De préférence, la composante adhésive contient des agents protecteurs tels que des anti-oxydants et des anti-UV tels que ceux proposés par la société Ciba Specialities commercialisés sous les dénominations Irganox et Tinuvin ou Wingstay L de la société Goodyear. De préférence, pour une meilleure incorporation lors de la formulation, on utilisera des produits sous forme liquide ou sous forme prédispersée.

De manière générale, pour son utilisation dans le coagulant, la phase aqueuse contenant le polymère ou les mélanges de polymères doit être homogène, ainsi la répartition des polymères dans le collage final sera également la plus homogène possible.

Nous qualifierons de "hydrosoluble" un polymère ou mélange de polymères qui forme une solution homogène dans l'eau. Les polymères entièrement solubles peuvent l'être sous forme acide, basique ou neutre. Alors que certains polymères sont solubles sur l'ensemble de la gamme de pH, certains sont solubles, par exemple, entre pH 2 et 10. Certains polymères, contenant majoritairement une amine par exemple peuvent être insolubles à haut pH, mais solubles ou partiellement solubles à des pH plus faibles, comme c'est le cas dans les solutions de coagulant qui ont un pH inférieur à 7.

On emploie le terme partiellement soluble, lorsque le polymère ne forme pas une solution vraie, mais lorsque qu'une partie de la macromolécule est soluble ou que les macromolécules sont dissoutes sous forme de micelles ou d'agrégats (dans le cas d'agrégats ceux-ci sont gonflés par l'eau dans de grandes proportions), sans toutefois qu'on observe deux phases distinctes dans la solution. Les polymères partiellement solubles forment ce que l'on appelle des solutions "colloïdales".

Le terme "hydrosoluble" englobera à la fois les polymères parfaitement solubles et ceux partiellement solubles (solution vraie et solution colloïdale).

L'assemblage de matériaux à l'aide de systèmes selon l'invention comprenant au moins un composant adhésif et au moins un composant coagulant contenant un capteur d'acide, se fait par application du mélange intime de ces composants sur au moins une des faces à assembler.

La quantité de colle nécessaire est comprise en général entre 30 et 300 g/m² humide et ce grammage se situe préférentiellement entre 50 et 200 g/m² humide. On obtient ainsi sur la ou les surfaces enduites un film de colle, permettant la mise en contact quasi-instantanée des parties à réunir. Il est cependant souhaitable que l'une des deux surfaces possède une certaine porosité, afin de faciliter l'élimination de l'eau du joint de colle. Dans les applications industrielles, les matériaux sont assemblés rapidement après enduction du film de colle, souvent avec un temps inférieur à la minute, mais si cela est souhaité, le temps de gommage peut être étendu facilement à 30 minutes.

Le type de collage précité est préférentiellement utilisé pour des assemblages de mousses sur divers supports comme mousse/mousse, mousse/bois, mousse/plastique, etc. dans l'industrie du matelas, du siège, du textile, de l'ameublement, etc.

La présente invention a également pour objet un procédé de collage, caractérisé en ce qu'il consiste à réunir par copulvérisation les deux composantes coagulante et adhésive d'une colle bicomposante selon l'invention afin d'obtenir un film adhésif globalement homogène déposé sur l'une au moins des deux parties ou faces des éléments à coller ensemble puis à mettre en contact ladite ou lesdites parties ou face(s) encollée(s).

Elle a également pour objet le produit collé susceptible d'être obtenu par le procédé qui se distingue des produits connus notamment par ses propriétés mécaniques et chimiques renforcées.

Enfin, la présente invention a encore pour objet un dispositif pour la mise en oeuvre du procédé susvisé, caractérisé en ce qu'il est réalisé sous la forme d'un pistolet présentant une première buse et une seconde buse coaxiales ou sensiblement coaxiales, la première buse étant reliée à un réservoir contenant la première composante coagulante et la seconde buse étant reliée à un réservoir contenant la seconde composante adhésive.

Ainsi, l'encollage de matériaux à l'aide de la colle bi-composante de la présente invention se fait de préférence à l'aide d'un appareil de pulvérisation. Cet appareil comprend notamment des cuves de stockage des deux composants, reliées par un système permettant l'acheminement des fluides, à une partie réalisant le mélange intime des deux composants. De préférence, pour ce dernier il s'agit d'un pistolet de pulvérisation, permettant une nébulisation simultanée de la composante adhésive et de la composante coagulante. Le mélange se produit alors dans le brouillard. Les pistolets préférentiellement utilisés possèdent une première buse et une seconde buse coaxiales ou sensiblement coaxiales, la première buse étant reliée à un réservoir contenant la composante coagulante comprenant le polymère capteur d'acide, et la seconde buse étant reliée à un réservoir contenant la composante adhésive.

Le rapport des débits de pulvérisation adhésif/coagulant est compris de préférence entre 10/1 et 1/1 et préférentiellement égal à ou proche de 10/3. Ce rapport peut être réglé, par exemple, à l'aide de pompes doseuses ou bien en contrôlant la pression régnant dans les cuves contenant les deux composantes. L'appareillage d'encollage peut être monoposte ou multiposte.

Une gamme d'appareillage d'encollage préférée et particulièrement adaptée est, par exemple, celle proposée par la société déposante CHIMISTRA (F-67520 Marlenheim) et commercialisée sous la dénomination AQUA-SYSTEM (marque déposée).

Pour mettre en évidence la stabilité du film de colle obtenu selon l'invention en comparaison à des formulations standards aqueuses ou solvantées, un test forcé aux irradiations UV a été élaboré. Ce test permet de déterminer le dégagement d'acide chlorhydrique au cours du temps lorsque le film de colle est soumis à une forte irradiation UV correspondant à une exposition aux rayons solaires à travers une vitre.

Le film de colle du présent test est préparé par encollage par pulvérisation des formulations sur une plaque de verre pour un grammage humide de l'ordre de 180 g/m². Après séchage complet, le film de colle est recouvert d'une pièce de tissu d'ameublement typiquement utilisé pour la fabrication d'un canapé.

Le même rouleau de tissu d'ameublement de couleur verte, présentant une décoloration jaunâtre en présence d'acide chlorhydrique a été utilisé pour toutes les expériences.

Par dessus la pièce en tissu, on a déposé une bande de papier indicateur pH (rouge Congo) sensible aux dégagements d'acide. Les éprouvettes verre/colle/tissu d'une série de colles à tester sont placées au même moment dans un appareil standard de test connu sous la dénomination Q-UV (Q-panel Lab. Products Bolton) muni de lampes à UV (340 nm) de 40 W.

Après un certain temps, la température dans l'enceinte d'irradiation atteint et est maintenue à 60°C. Les éprouvettes sont observées régulièrement au cours du temps et 3 paramètres visuels sont notés, à savoir:
- la variation de la couleur du papier indicateur,
- la coloration du film de colle, et
- la dégradation du tissu.

Les performances de résistance des films de colles ont été examinées en fonction du nombre d'heures d'irradiation aux UV et comparées.

Les performances de collage de la colle bicomposante selon l'invention sont mesurées à l'aide d'un test dit de « pincé-collé ». La surface de 60 mm x 120 mm d'un bloc de mousse en polyuréthane de 60 mm x 120 mm x 120 mm et de densité de l'ordre de 40 kg/m³ est encollé par pulvérisation de la colle à tester à raison de grammages de 100 g/m² et de 130 g/m². La surface encollée est immédiatement mise en contact avec elle-même par réalisation d'un pincé manuel de manière à obtenir un pli par le milieu le long des 120 mm. Il en résulte une forte tension sur le joint de collage et les performances de la colle à tester sont appréciées selon que le joint reste parfaitement fermé ou qu'il y a décollement au niveau du contact. Les performances, respectivement la contactibilité de la colle à tester, sont jugées bonnes si le joint demeure fermé après une heure écoulée depuis l'assemblage pour l'un des deux grammages et très bonnes si le joint reste fermé pour les deux grammages indiqués.

Tous les pourcentages indiqués, sauf indication contraire, sont des valeurs en poids sec. Toutes les pulvérisations ont été réalisées à l'aide de l'appareil Aquasystem 21/22 fourni par la société Chimistra SA.

### Essai A

L'essai suivant compare la stabilité aux rayonnements UV de films d'une formulation de polychloroprène en dispersion pulvérisée sans agent coagulant, avec la même formulation pulvérisée en présence d'un agent coagulant standard et avec la même formulation pulvérisée en présence d'un agent coagulant selon l'invention. Le but de cet exemple est de mettre en évidence l'influence bénéfique d'un copolymère fonctionnalisé solubilisé dans l'agent coagulant.

La dispersion de polychloroprène utilisée en tant que composante adhésive est une dispersion standard pour cette application telle que le Dispercol C84 de la société Bayer, dans laquelle sont ajoutés des additifs protecteurs Irganox 1520D et Tinuvin 213 tous les deux à raison de 1%.

L'agent coagulant standard est une solution aqueuse à 20 % de sulfate de zinc.

L'agent coagulant (ou agent de coagulation) selon l'invention utilisé pour les essais suivants comprend un copolymère à base d'acide acrylique et de diaminoéthylméthacrylate commercialisé par la déposante sous la dénomination ENOREX VN 230 (marque déposée). Ce dernier a été mis en oeuvre sous la forme d'une solution aqueuse à 4,5 % en poids de copolymère, solution dont le pH a été ajusté à 4 à par adjonction d'acide ascorbique. Les résultats sont présentés dans le tableau 1 suivant.

**Tableau 1**

| Agent coagulant | Papier indicateur (rouge Congo) virage au bleu | Tissu (présence d'une décoloration) | Film de colle aspect après 100 heures |
|---|---|---|---|
| Aucun (témoin) | après 24 heures | après 40 heures | brun |
| Solution de sulfate de Zn | après 24 heures | après 40 heures | brun |
| Solution selon l'invention (Enorex VN 230 + acide ascorbique) | après 100 heures | après 110 heures | jaune |

On constate que la stabilité aux rayonnements UV est meilleure dans le cas du système de colle bicomposante faisant intervenir le polymère hydrosoluble fonctionnalisé dans un agent de coagulation conforme à la présente invention. On peut également le constater, le film de colle de couleur initiale blanchâtre ne vire que légèrement au jaune après 100 h avec la solution de coagulation selon l'invention.

### Essai B

Cet essai permet de vérifier la stabilité aux rayonnements UV et les performances adhésives (selon le test du pincé-collé) dans le cas de solutions comprenant au moins un agent de coagulation selon l'invention dont le pH est abaissé en dessous de 5 à l'aide de différents type d'acidifiants.

Les résultats donnés dans le tableau 2 ci-après sont comparés à ceux obtenus lorsque la colle est pulvérisée sans agent coagulant et lorsqu'elle est pulvérisée avec un agent coagulant standard à savoir une solution de sulfate d'aluminium à 20 %. La composante adhésive est la même que celle de l'exemple A.

Le polymère fonctionnalisé contenu dans la solution de coagulation de cet essai est le même que celui cité dans l'essai A et est solubilisé à raison de deux concentrations différentes. Tous les essais sont réalisés pour un ratio (en poids humide) composante adhésive/agent coagulant de 10/3.

**Tableau 2**

| Agent coagulant | Conc. en polymère (%) | Pincé-collé | jaunissement du film de colle après |
|---|---|---|---|
| Aucun (témoin) | - | mauvais | 30 heures |
| Enorex VN 230 + acide lactique | 1.2 4.5 | bon très bon | 40 heures 40 heures |
| Enorex VN 230 + acide ascorbique | 1.2 4.5 | bon très bon | 40 heures 40 heures |
| Enorex VN 230 + sulfate d'aluminium | 1.2 4.5 | très bon très bon | 30 heures 30 heures |
| sulfate d'aluminium | - | très bon très bon | 18 heures 18 heures |

### Essai C

Les colles solvantées sont à ce jour encore largement utilisées dans le domaine du collage de mousses notamment dans l'ameublement. Dans le cadre du remplacement des systèmes solvantés par des systèmes aqueux, on compare dans cet exemple la résistance aux rayonnements UV de colle contact polychloroprène en phase solvant et de colle contact polychloroprène en phase aqueuse selon l'invention

Comme essai témoin, une solution de polychloroprène Butaclor MA 434 de la société EniChem Elastomères France à 10 % dans le toluène a été préparée en laboratoire et pulvérisée sur une plaque de verre afin d'obtenir une dépose en polychloroprène équivalente à celle obtenue dans le cas de la colle aqueuse bicomposante selon l'invention.

Une colle contact polychloroprène solvantée standard contenant de l'ordre de 15 % de polychloroprène a également été étudiée. Il est à noter que dans le cas d'une dispersion aqueuse, le taux de solide de polychloroprène est beaucoup plus élevé et peut atteindre 50 %.

La formulation aqueuse de colle selon l'invention a comme composition :

| | | |
|---|---|---|
| Composante adhésive | Dispercoll C84 | 100 parties |
| | Irganox 1520 D | 1 partie |
| | Tinuvin 213 | 1 partie |
| | | |
| Composante coagulante | Enorex VN 230 | 4 parties |
| | Acide lactique | qsp pour pH=3 |
| | Eau | 96 parties |
| | | |
| Rapport adhésif / coagulant | 10/3 | |

Les résultats présentés dans le tableau 3 montrent qu'une colle polychloroprène solvantée standard soumise à un test forcé aux UV conduit aux phénomènes connus de dégradation, mais de moindre intensité.

La résistance aux UV dans le cas de la colle bicomposante selon l'invention est largement augmentée.

**Tableau 3**

| Colle | Couleur du papier indicateur (rouge Congo) après n heures | Décoloration du textile | Jaunissement du film de colle |
|---|---|---|---|
| Solution de polychloroprène dans le toluène (témoin) | bleu après 8 heures | après 8 heures | après 15 heures |
| Colle solvantée polychloroprène standard | violet après 18 heures | après 40 heures | après 24 heures |
| Formulation de colle aqueuse selon l'invention | bleu après 100 heures | après 100 heures | après 100 heures |

Bien entendu, l'invention n'est pas limitée aux modes de réalisation décrits. Des modifications restent possibles, notamment du point de vue de la constitution des divers éléments ou par substitution d'équivalents techniques, sans sortir pour autant du domaine de protection de l'invention.

## Revendications

1. Agent de coagulation pour colles bi- ou multicomposantes présentant au moins une première composante coagulante et une seconde composante adhésive, **caractérisé en ce qu'**il comprend essentiellement au moins un polymère possédant au moins un groupement fonctionnel acide et au moins un polymère possédant au moins un groupement fonctionnel basique.

2. Agent selon la revendication 1, **caractérisé en ce qu'**il comprend au moins un polymère possédant à la fois au moins un groupement fonctionnel acide et au moins un groupement fonctionnel basique.

3. Agent selon la revendication 1 ou 2, **caractérisé en ce qu'**au moins un groupement fonctionnel acide est un groupement carboxyle.

4. Agent selon l'une quelconque des revendications 1 à 3, **caractérisé en ce qu'**au moins un groupement fonctionnel basique comporte au moins un atome d'azote.

5. Agent selon la revendication 4, **caractérisé en ce qu'**au moins un groupement fonctionnel basique est un groupement aminé.

6. Agent selon la revendication 4 ou 5, **caractérisé en ce qu'**au moins un groupement fonctionnel basique est choisi dans le groupe formé par : la 2-vinylpyridine, la 4-vinylpyridine, le (méth)acrylate de béta-aminoéthyle, le (méth)acrylate de t-butylaminoéthyle, le (méth)acrylate de méthylaminoéthyle, ainsi que le (méth)acrylate de diméthylaminoéthyle, la N-monométhylaminoéthyl(méth)acrylamide, la diméthylaminopropyl-(méth)acrylamide et leurs mélanges.

7. Agent selon l'une quelconque des revendications 1 à 6, **caractérisé en ce que** le rapport R entre le nombre de groupements fonctionnels acides et le nombre de groupements fonctionnels basiques présents sur le ou les polymères est compris entre 1:80 et 1:1.

8. Agent selon la revendication 7, **caractérisé en ce que** le rapport R est compris entre 1:20 et 1:7.

9. Agent selon l'une quelconque des revendications 1 à 8, **caractérisé en ce qu'**il contient au moins un polymère présentant au moins un monomère (méth)acrylique muni d'au moins une fonction acide.

10. Agent selon l'une quelconque des revendications 1 à 9, **caractérisé en ce qu'**il contient au moins un polymère dont au moins l'un des monomères est choisi dans le groupe formé par l'acide fumarique, l'acide maléique, l'acide itaconique, l'anhydride maléique, le fumarate de monométhyle et le fumarate de monobutyle.

11. Agent selon l'une quelconque des revendications 1 à 10, **caractérisé en ce qu'**il contient au moins un polymère dont au moins l'un des monomères est un acrylate, un méthacrylate, une acrylamide ou une méthacrylamide et comportant une amine susceptible de se protoner.

12. Agent selon l'une quelconque des revendications 1 à 11, **caractérisé en ce que** la masse molaire moyenne du ou des polymères possédant le ou les groupements acides et/ou basiques est inférieure à 1 000 000 g, de préférence inférieure à 500 000 g et plus préférentiellement comprise entre 500 et 500 000 g.

13. Solution contenant un agent de coagulation selon l'une quelconque des revendications 1 à 12, le pH de ladite solution étant inférieur à 7.

14. Solution selon la revendication 13, **caractérisée en ce que** le solvant du ou des polymères est essentiellement de l'eau.

15. Solution selon la revendication 13 ou 14, **caractérisée en ce que** la teneur en groupement fonctionnel basique est supérieure à 0,1 mol/litre.

16. Solution selon l'une quelconque des revendications 13 à 15, **caractérisée en ce qu'**elle présente une teneur en polymère(s) possédant un ou plusieurs groupements acides et/ou basiques comprise entre 0,1 % et 45 % en poids.

17. Solution selon la revendication 16, **caractérisée en ce qu'**elle présente une teneur en polymère(s) possédant un ou plusieurs groupements acides et/ou basiques comprise entre 0,2 % et 15 % en poids.

18. Solution selon l'une quelconque des revendications 13 à 17, **caractérisée en ce que** son pH est inférieur à 5.

19. Solution selon la revendication 18, **caractérisée en ce qu'**elle comprend, en outre, au moins un acide faible, de préférence un acide faible organique.

20. Solution selon la revendication 19, **caractérisée en ce que** le ou les acides faibles sont choisis dans le groupe formé par l'acide formique, l'acide acétique, l'acide propanoïque, l'acide butanoïque, l'acide lactique, l'acide tartrique, l'acide ascorbique, l'acide phosphorique et l'acide glycolique.

21. Solution selon l'une quelconque des revendications 18 à 20, **caractérisée en ce qu'**elle comprend, en outre, au moins un sel métallique acide.

22. Solution selon la revendication 21, **caractérisée en ce que** le ou les sels métalliques acides sont choisis parmi le sulfate de zinc ou le sulfate d'aluminium.

23. Solution selon l'une quelconque des revendications 13 à 22, **caractérisée en ce qu'**elle présente une viscosité comprise entre 0,9 mPa.s et 10 000 mPa.s, de préférence inférieure à 500 mPa.s, de manière à pouvoir être appliquée par pulvérisation.

24. Utilisation d'un agent de coagulation selon l'une quelconque des revendications 1 à 12 ou d'une solution selon l'une quelconque des revendications 13 à 23 pour l'obtention d'une colle bi- ou multicomposante.

25. Colle bi- ou multicomposante comprenant au moins un agent de coagulation selon l'une quelconque des revendications 1 à 12 ou au moins une solution contenant un tel agent selon l'une quelconque des revendications 13 à 23.

26. Colle selon la revendication 25, **caractérisée en ce qu'**elle est bicomposante, l'agent de coagulation selon l'une quelconque des revendications 1 à 12 ou la solution contenant un tel agent selon l'une quelconque des revendications 13 à 23 constituant la première composante coagulante, la seconde composante étant la composante adhésive.

27. Colle selon la revendication 26, **caractérisée en ce que** la seconde composante adhésive contient du polychloroprène ou poly(2-chloro-1,3-butadiène) susceptible de coaguler par diminution du pH.

28. Procédé de collage, **caractérisé en ce qu'**il consiste à réunir par copulvérisation les deux composantes coagulante et adhésive d'une colle bicomposante selon la revendication 26 afin d'obtenir un film adhésif globalement homogène déposé sur l'une au moins des deux parties ou faces des éléments à coller ensemble puis à mettre en contact ladite ou lesdites parties ou face(s) encollée(s).

29. Produit collé susceptible d'être obtenu par le procédé selon la revendication 28.

30. Dispositif pour la mise en oeuvre du procédé selon la revendication 28, **caractérisé en ce qu'**il est réalisé sous la forme d'un pistolet présentant une première buse et une seconde buse coaxiales ou sensiblement coaxiales, la première buse étant reliée à un réservoir contenant la première composante coagulante et la seconde buse étant reliée à un réservoir contenant la seconde composante adhésive.

## Claims

1. Coagulating agent for two- or multi-component adhesives having at least a first coagulating component and a second adhesive component, **characterised in that** it comprises essentially at least one polymer having at least one acid functional group and at least one polymer having at least one basic functional group.

2. Agent according to claim 1, **characterised in that** it comprises at least one polymer having simultaneously at least one acid functional group and at least one basic functional group.

3. Agent according to claim 1 or 2, **characterised in that** at least one acid functional group is a carboxyl group.

4. Agent according to any of claims 1 to 3, **characterised in that** at least one basic functional group comprises at least one atom of nitrogen.

5. Agent according to claim 4, **characterised in that** at least one basic functional group is an amino group.

6. Agent according to claim 4 or 5, **characterised in that** at least one basic functional group is selected from the group formed by: 2-vinyl pyridine, 4-vinyl pyridine, beta-aminoethyl (meth)acrylate, t-butylaminoethyl (meth)acrylate, methylaminoethyl (meth) acrylate, as well as dimethylaminoethyl (meth)acrylate, N-monomethylaminoethyl (meth)acrylamide, dimethylaminopropyl(meth)acrylamide and mixtures thereof.

7. Agent according to any of claims 1 to 6, **characterised in that** the ratio R between the number of acid functional groups and the number of basic functional groups present in the or each polymer is between 1:80 and 1:1.

8. Agent according to claim 7, **characterised in that** the ratio R is between 1:20 and 1:7.

9. Agent according to any of claims 1 to 8, **characterised in that** it contains at least one polymer having at least one (meth)acrylic monomer provided with at least one acid function.

10. Agent according to any of claims 1 to 9, **characterised in that** it contains at least one polymer of which at least one of the monomers is selected from the group formed by fumaric acid, maleic acid, itaconic acid, maleic anhydride, monomethyl fumarate and monobutyl fumarate.

11. Agent according to any of claims 1 to 10, **characterised in that** it contains at least one polymer of which at least one of the monomers is an acrylate, a methacrylate, an acrylamide or a methacrylamide and containing an amine capable of protonation.

12. Agent according to any of claims 1 to 11, **characterised in that** the mean molar mass of the or each polymer having the or each acid and/or basic group is lower than 1 000 000 g, preferably lower than 500 000 g and more preferred between 500 and 500 000 g.

13. Solution containing a coagulation agent according to any of claims 1 to 12, the pH of said solution being less than 7.

14. Solution according to claim 13, **characterised in that** the solvent of the or each polymer is essentially water.

15. Solution according to claim 13 or 14, **characterised in that** the content of basic functional group is greater than 0.1 mol/litre.

16. Solution according to any of claims 13 to 15, **characterised in that** it has a content of polymer(s) having one or more acid and/or basic groups contained between 0.1 % and 45% by weight.

17. Solution according to claim 16, **characterised in that** it has a content of polymer(s) having one or more acid and/or basic groups contained between 0.2% and 15% by weight.

18. Solution according to any of claims 13 to 17, **characterised in that** its pH is lower than 5.

19. Solution according to claim 18, **characterised in that** it comprises moreover at least one weak acid, preferably an organic weak acid.

20. Solution according to claim 19, **characterised in that** the or each weak acid is selected from the group formed by formic acid, acetic acid, propanoic acid, butanoic acid, lactic acid, tartaric acid, ascorbic acid, phosphoric acid and glycolic acid.

21. Solution according to any of claims 18 to 20, **characterised in that** it comprises furthermore at least an acid metal salt.

22. Solution according to claim 21, **characterised in that** the or each acid metal salt is selected from zinc sulphate or aluminium sulphate.

23. Solution according to any of claims 13 to 22, **characterised in that** it has a viscosity between 0.9 mPa.s and 10 000 mPa.s, preferably lower than 500 mPa.s, so as to be able to be applied through pulverisation.

24. Use of a coagulation agent according to any of claims 1 to 12, or a solution according to any of claims 13 to 23 in order to obtain a two- or multi-component adhesive.

25. Two or multi-component adhesive comprising at least one coagulation agent according to any of claims 1 to 12 or at least a solution containing such agent according to any of claims 13 to 23.

26. Adhesive according to claim 25, **characterised in that** it is a two-part compound, the coagulation agent according to any of claims 1 to 12 or the solution containing such agent according to any of claims 13 to 23 making up the first coagulation compound, and the second compound being the adhesive component.

27. Adhesive according to claim 26, **characterised in that** the second adhesive component contains polychloroprene or poly(2-chloro-1,3-butadiene) cable of coagulating through a reduction in the pH.

28. Adhesive process, **characterised in that** it consists in reuniting through co-pulverisation the two coagulant and adhesive compositions of a two-component adhesive according to claim 26 in order to obtain a globally homogeneous adhesive film deposited on at least one of the two parts or surfaces of the elements which are to be glued together and then in placing the or each sticky part or surface in contact with one another.

29. Glued product capable of being obtained through the process according to claim 28.

30. Device for carrying out the process according to claim 28, **characterised in that** it is made in the form of a spray gun having a first nozzle and a second nozzle coaxial or substantially coaxial therewith wherein the first nozzle is connected to a reservoir containing the first coagulating component and the second nozzle is connected to a reservoir containing the second adhesive component.

## Patentansprüche

1. Koagulationsmittel für Bi- oder Multikomponentenkleber, umfassend mindestens eine koagulierende erste Komponente und eine adhäsive zweite Komponente, **dadurch gekennzeichnet, dass** es im wesentlichen mindestens ein Polymeres, das mindestens eine saure funktionelle Gruppe aufweist, und mindestens ein Polymeres, das mindestens eine basische funktionelle Gruppe aufweist, umfasst.

2. Mittel nach Anspruch 1, **dadurch gekennzeichnet, dass** es mindestens ein Polymeres umfasst, das gleichzeitig mindestens eine saure funktionelle Gruppe und mindestens eine basische funktionelle Gruppe aufweist.

3. Mittel nach Anspruch 1 oder 2, **dadurch gekennzeichnet, dass** es sich bei mindestens einer sauren funktionellen Gruppe um eine Carboxylgruppe handelt.

4. Mittel nach einem der Ansprüche 1 bis 3, **dadurch gekennzeichnet**, das mindestens eine basische funktionelle Gruppe, mindestens ein Stickstoffatom trägt.

5. Mittel nach Anspruch 4, **dadurch gekennzeichnet, dass** es sich bei mindestens einer basischen funktionellen Gruppe um eine aminierte Gruppe handelt.

6. Mittel nach Anspruch 4 oder 5, **dadurch gekennzeichnet, dass** mindestens eine basische funktionelle Gruppe aus folgender Gruppe ausgewählt ist: 2-Vinylpyridin, 4-Vinylpyridin, β-Aminoethyl(meth)acrylat, tert.-Butylaminoethyl(meth)acrylat, Methylaminoethyl (meth) acrylat, sowie Dimethylaminoethyl (meth) acrylat, N-Monomethylaminoethyl (meth) acrylamid, Dimethylaminopropyl (meth) acrcylamid und Gemische davon.

7. Mittel nach einem der Ansprüche 1 bis 6, **dadurch gekennzeichnet, dass** das Verhältnis R zwischen der Anzahl der sauren funktionellen Gruppen und der Anzahl der basischen funktionellen Gruppen, die in dem oder den Polymeren vorhanden sind, 1:80 bis 1:1 beträgt.

8. Mittel nach Anspruch 7, **dadurch gekennzeichnet, dass** das Verhältnis R 1:20 bis 1:7 beträgt.

9. Mittel nach einem der Ansprüche 1 bis 8, **dadurch gekennzeichnet, dass** es mindestens ein Polymeres enthält, das mindestens ein (Meth)acrylmonomeres, das mit mindestens einer sauren Funktion versehen ist, aufweist.

10. Mittel nach einem der Ansprüche 1 bis 9, **dadurch gekennzeichnet, dass** es mindestens ein Polymeres enthält, von dem mindestens eines der Monomeren aus der Gruppe Fumarsäure, Maleinsäure, Itaconsäure, Maleinsäureanhydrid, Monomethylfumarat und Monobutylfumarat ausgewählt ist.

11. Mittel nach einem der Ansprüche 1 bis 10, **dadurch gekennzeichnet, dass** es mindestens ein Polymeres enthält, von dem es sich bei mindestens einem der Monomeren um ein Acrylat, Methacrylat, Acrylamid oder Methacrylamid handelt und das ein Amin, das einer Protonierung zugänglich ist, aufweist.

12. Mittel nach einem der Ansprüche 1 bis 11, **dadurch gekennzeichnet, dass** die durchschnittliche Molmasse des oder der Polymeren, die eine oder mehrere saure Gruppen und/oder basische Gruppen aufweisen, unter 1 000 000 g, vorzugsweise unter 500 000 g und insbesondere zwischen 500 und 500 000 g liegt.

13. Lösung, enthaltend ein Koagulationsmittel nach einem der Ansprüche 1 bis 12, wobei der pH-Wert der Lösung unter 7 liegt.

14. Lösung nach Anspruch 13, **dadurch gekennzeichnet, dass** es sich beim Lösungsmittel des oder der Polymeren im wesentlichen um Wasser handelt.

15. Lösung nach Anspruch 13 oder 14, **dadurch gekennzeichnet, dass** der Anteil der basischen funktionellen Gruppe mehr als 0,1 mol/Liter beträgt.

16. Lösung nach einem der Ansprüche 13 bis 15, **dadurch gekennzeichnet, dass** es einen Gehalt an einem oder mehreren Polymeren, die eine oder mehrere saure und/oder basische Gruppen aufweisen, von 0,1. bis 45 Gew.-% aufweist.

17. Lösung nach Anspruch 16, **dadurch gekennzeichnet, dass** sie einen Gehalt an einem oder mehreren Polymeren, die eine oder mehrere saure und/oder basische Gruppen aufweisen, von 0,2 bis 15 Gew.-% aufweist.

18. Lösung nach einem der Ansprüche 13 bis 17, **dadurch gekennzeichnet, dass** ihr pH-Wert unter 5 liegt.

19. Lösung nach Anspruch 18, **dadurch gekennzeichnet, dass** sie unter anderem mindestens eine schwache Säure und vorzugsweise eine schwache organische Säure umfasst.

20. Lösung nach Anspruch 19, **dadurch gekennzeichnet, dass** die schwache Säure oder die schwachen Säuren aus der Gruppe ausgewählt sind, die aus Ameisensäure, Essigsäure, Propansäure, Butansäure, Milchsäure, Weinsäure, Ascorbinsäure, Phosphorsäure und Glycolsäure besteht.

21. Lösung nach einem der Ansprüche 18 bis 20, **dadurch gekennzeichnet, dass** sie unter anderem mindestens ein saures Metallsalz umfasst.

22. Lösung nach Anspruch 21, **dadurch gekennzeichnet, dass** das oder die sauren Metallsalze aus Zinksulfat oder Aluminiumsulfat ausgewählt sind.

23. Lösung nach einem der Ansprüche 13 bis 22, **dadurch gekennzeichnet, dass** sie eine Viskosität von 0,9 mPa.s bis 10 000 mPa·s, vorzugsweise unter 500 mPa.s, aufweist, damit man sie durch Versprühen aufbringen kann.

24. Verwendung eines Koagulationsmittels nach einem der Ansprüche 1 bis 12 oder einer Lösung nach einem der Ansprüche 13 bis 23 zur Herstellung eines Bi- oder Multikomponentenklebers.

25. Bi- oder Multikomponentenkleber, umfassend mindestens ein Koagulationsmittel nach einem der Ansprüche 1 bis 12 oder mindestens eine Lösung mit einem Gehalt an derartigen Mitteln nach einem der Ansprüche 13 bis 23.

26. Kleber nach Anspruch 25, **dadurch gekennzeichnet, dass** es sich um einen Bikomponentenkleber handelt, wobei das Koagulationsmittel nach einem der Ansprüche 1 bis 12 oder die Lösung mit einem Gehalt an einem derartigen Mittel nach einem der Ansprüche 13 bis 23 die koagulierende erste Komponente darstellt und es sich bei der zweiten Komponente um die adhäsive Komponente handelt.

27. Kleber nach Anspruch 26, **dadurch gekennzeichnet, dass** die adhäsive zweite Komponente Polychloropren oder Poly-(2-chlor-1,3-butadien) enthält, die durch Verringerung des pH-Werts einer Koagulation zugänglich sind.

28. Klebeverfahren, **dadurch gekennzeichnet, dass** es darin besteht, dass durch gemeinsames Zerstäuben die beiden koagulierenden und adhäsiven Komponenten eines Bikomponentenklebers nach Anspruch 26 vereinigt werden, um einen insgesamt homogenen Klebefilm zu erhalten, der auf mindestens einen von zwei Teilen oder Seiten von zu verklebenden Elementen aufgebracht ist, wonach die mit Klebstoff versehenen Teile oder Seiten miteinander in Kontakt gebracht werden.

29. Geklebtes Produkt, das durch das Verfahren nach Anspruch 28 erhältlich ist.

30. Vorrichtung zur Durchführung des Verfahrens nach Anspruch 28, **dadurch gekennzeichnet, dass** sie in Form einer Pistole ausgebildet ist, die eine erste Düse und eine zweite Düse aufweist, die koaxial oder im wesentlichen koaxial verlaufen, wobei die erste Düse mit einem Reservoir verbunden ist, das die koagulierende erste Komponente enthält, und die zweite Düse mit einem Reservoir verbunden ist, das die zweite adhäsive Komponente enthält.
